# FASCICULE DE BREVET EUROPEEN

(11) **EP 3 342 713 B1**
(45) Date de publication et mention de la délivrance du brevet: **02.09.2020**
(21) Numéro de dépôt: 17198617.7
(22) Date de dépôt: 26.10.2017
(51) Int. Cl.: B64D 15/16

(54) **DISPOSITIF DE DEGIVRAGE DE TYPE PNEUMATIQUE POUR BRISER ET RETIRER UN DEPOT DE GLACE ACCUMULEE SUR LA SURFACE EXTERIEURE D'UN AERONEF**
ENTEISUNGSVORRICHTUNG PNEUMATISCHER ART ZUM AUFBRECHEN UND ENTFERNEN EINER EISSCHICHT, DIE SICH AUF DER AUSSENSEITE EINES LUFTFAHRZEUGS AKKUMULIERT HAT
PNEUMATIC DE-ICING DEVICE FOR BREAKING UP AND REMOVING AN ICE DEPOSIT BUILT UP ON THE OUTSIDE SURFACE OF AN AIRCRAFT

(30) Priorité: 27.12.2016 FR 1663419
(43) Date de publication de la demande: 04.07.2018
(73) Titulaire: Safran Aerosystems, 78370 Plaisir (FR)
(72) Inventeur: BRIAND, Valérie, 27670 SAINT-OUEN-DU-TILLEUL (FR)
(74) Mandataire: Cabinet Netter

(56) Documents cités:
- EP-A1- 0 066 519
- EP-A2- 0 409 120
- WO-A1-02/42150
- WO-A2-02/16200
- FR-A- 1 271 461
- FR-A1- 2 091 965
- FR-A1- 2 107 884
- GB-A- 2 279 272
- US-A- 5 449 134

## Description

La présente invention concerne un dispositif de dégivrage de type pneumatique pour briser et retirer un dépôt de glace accumulée sur la surface extérieure d'un aéronef.

En particulier, quoique non exclusivement, le dispositif de dégivrage est destiné à équiper les ailes, les empennages, les entrées d'air moteur ou d'autres pièces similaires appartenant à des aéronefs tels que des avions ou des hélicoptères.

Il est connu, lorsque ces aéronefs traversent des zones où les conditions météorologiques sont rigoureuses et défavorables, que du givre peut notamment se former à plus ou moins long terme sur ces surfaces aérodynamiques, ce qui peut engendrer un alourdissement et une modification du profil aérodynamique de l'aile susceptible de modifier la portance et la trainée. Cela peut modifier le comportement en vol de l'aéronef et par la suite engendrer des dysfonctionnements de celui-ci pouvant avoir de graves conséquences pour le pilotage. Ainsi, ces surfaces peuvent être équipées de dispositifs de dégivrage du type à résistance électrique ou à enveloppe gonflable.

Dans ce dernier cas, auquel se rapporte l'invention, les dispositifs de dégivrage connus comportent de manière générale une enveloppe souple qui recouvre au moins partiellement ladite surface et qui peut se gonfler rapidement. Ainsi, lorsque du givre se forme sur la surface aérodynamique du gaz sous pression est envoyé dans l'enveloppe. L'enveloppe subit alors une expansion brutale qui engendre la rupture de la couche de givre en une pluralité de morceaux, puis l'éjection de ceux-ci de ladite surface. De tels dispositifs sont notamment décrits dans le brevet EP 0 066 519 A1, le brevet FR2749562A1 ou le brevet US2002084382.

Or, ces dispositifs présentent un inconvénient majeur car l'enveloppe souple, en général de type multicouche, est lourde, notamment par l'utilisation d'une couche interne de liaison avec la surface extérieure de l'aéronef qui est très épaisse.

Or, la recherche de la réduction de masse est un leitmotiv en aéronautique car l'allègement permet de réaliser des économies substantielles de carburant ce qui constitue un plus vis-à-vis de l'environnement et des coûts d'exploitation.

Un but de la présente invention est donc de résoudre les problèmes cités précédemment et de proposer une solution simple à mettre en œuvre, légère et fiable, en modifiant l'interface de collage avec la surface extérieure de l'aéronef.

Ainsi, la présente invention a pour objet un dispositif de dégivrage selon la revendication 1.

Selon des modes de réalisation préférés, le dispositif conforme à la présente invention comprend l'une au moins des caractéristiques suivantes :
- la couche constituée de textile de la couche interne d'interface est du type faisant partie de la liste comprenant un textile tricoté, un textile tissé, un textile non tissée obtenu par voie mécanique, par collage ou par soudure, un textile à nappe tramée, un textile à grille ou un tissu unidirectionnel (UD),
- le matériau constituant la couche constituée de textile de la couche interne d'interface appartient à la liste comprenant le polyamide, le polyester, la rayonne, le coton, le verre, le polyéthylène, le polypropylène, l'aramide, la para-aramide, le polytétrafluoroéthylène (PTFE), la polyétheréthercétone (PEEK), ou le carbone, ou une combinaison de de ces matériaux,
- la couche constituée de textile de la couche interne d'interface présente une surface extérieure traitée par une solution d'adhérisation de type plein bain,
- la couche constituée de textile de la couche interne d'interface présente une surface extérieure traitée par une solution d'adhérisation plein bain de type RFL (Résorcine, Formol, Latex),
- la couche constituée de textile de la couche interne d'interface présente une surface extérieure traitée par une solution d'adhérisation plein bain de type à solution comprenant des isocyanates,
- la couche constituée de textile de la couche interne d'interface présente une surface extérieure traitée par une solution d'adhérisation plein bain de type à résines réactives,
- la couche constituée de textile de la couche interne d'interface présente une surface extérieure et/ou intérieure traitée par un traitement électrostatique, par exemple de type Corona, par plasma atmosphérique ou par fibroline,
- la couche interne d'interface comporte, sur la surface extérieure de la couche constituée de textile, une couche de caoutchouc, de préférence un élastomère, par exemple un élastomère de type naturel (NR), polyisoprène (IR), polybutadiène (BR), chloroprène (CR), polyuréthane (PU) ou épichlorhydrine (ECO),
- la couche de caoutchouc présente une épaisseur d'environ 0,10 à 0,30 mm et de préférence de 0,15 à 0,25 mm,
- la couche intermédiaire interne comporte une couche textile supérieure et une couche inférieure réalisée dans un matériau identique à celui de la couche de caoutchouc de la couche interne d'interface ;
- la couche intermédiaire interne et la couche interne d'interface sont empilées tête bêche l'une sur l'autre, leurs couches respectives en caoutchouc étant liées entre elles, de préférence par co-vulcanisation ;
- la surface intérieure de la couche constituée de textile de la couche interne d'interface est non adhérisée, et
- la couche constituée de textile de la couche interne d'interface présente une densité surfacique inférieure à environ 400g/m², de préférence inférieure à environ 300g/m² et de manière avantageuse inférieure à environ 120g/m².

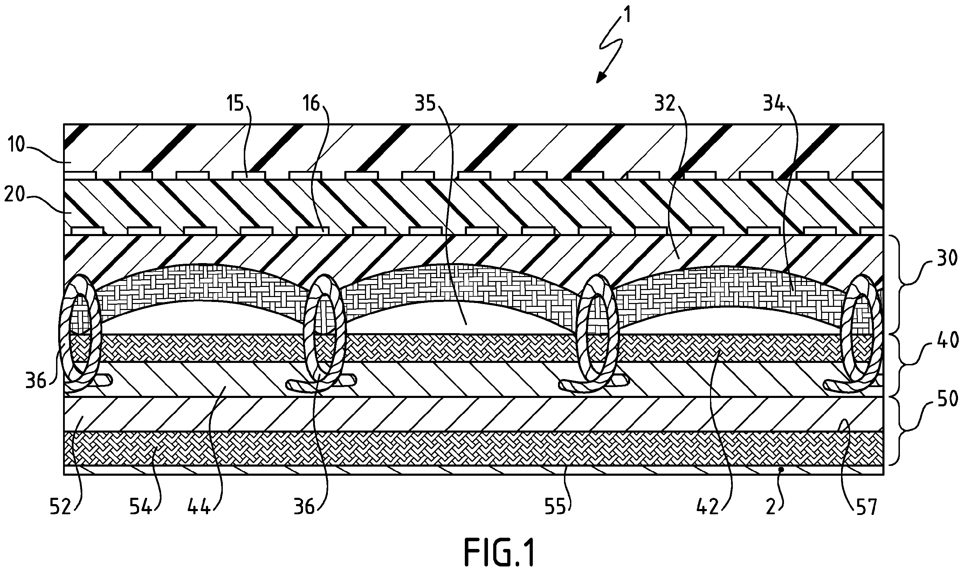

L'invention va maintenant être décrite plus en détail en référence à un mode de réalisation particulier donnés à titre d'illustration uniquement et représentés sur la figure 1 qui représente en vue en coupe du dispositif conforme à l'invention.

La figures 1 représente un dispositif 1 de dégivrage de type pneumatique pour briser et retirer un dépôt de glace accumulée sur la surface extérieure 2 d'un aéronef, par exemple d'une aile d'avion dans le cas présent.

Le dispositif 1 comporte, de l'extérieur vers la surface 2 de l'aéronef :
- une couche externe 10 destinée à résister à l'environnement extérieur (fluides, abrasion, projections de cailloux) et sur laquelle du givre peut être amené à se déposer. Cette couche externe 10 est typiquement constituée de polyuréthane (PU), un élastomère polaire permettant de résister aux fluides. Plus rarement cette couche externe 10 pourra être en polychloroprène (CR) ;
- une couche 20 en générale en polychloroprène (CR) ou en gomme (mélange de caoutchouc de type naturel (NR) et de polychloroprène). Elle nécessite également l'apport d'une couche de colle 15 afin de la lier à la couche externe ;
- une couche intermédiaire externe 30 comportant une couche 32 constituée de caoutchouc de type naturel (NR) ou poly-isoprène (IR) ou polybutadiène (BR), qui sont des caoutchoucs apolaires, liée à la couche 20 par l'intermédiaire d'une couche de colle 16, et une couche 34 de tricot textile déformable qui permet le gonflement de chambres internes 35 reliées à un dispositif d'injection d'air sous pression (non représenté).
- une couche intermédiaire interne 40, formant les chambres internes gonflables 35 avec la couche en tricot textile 34 de la couche intermédiaire externe 30. Cette couche intermédiaire interne 40 comporte une couche textile 42, par exemple obtenue par tissage, et une couche 44 constituée de préférence d'un élastomère, par exemple un élastomère de type naturel (NR), polyisoprène (IR), polybutadiène (BR), chloroprène (CR), polyuréthane (PU) ou épichlorhydrine (ECO). Les couches intermédiaires externe 30 et interne 40 sont reliées l'une à l'autre à l'aide d'un réseau de points de couture espacés 36 pour former les chambres internes 35 entre eux.
- une couche interne d'interface 50 destinée à être liée à la surface extérieure 2 de l'aéronef, de préférence par collage de sa surface. Cette couche interne d'interface 50 comporte une couche de caoutchouc 52 et une couche textile 54 dont la surface intérieure 55 est collée à la surface extérieure 2 de l'aéronef. A cet effet, la surface intérieure 55 est traitée ou non par une solution d'adhérisation.

La couche textile 54 est par exemple un textile tricoté, un textile tissé, un textile non tissé obtenu par voie mécanique, par collage ou par soudure, un textile à nappe tramée, un textile à grille ou un tissu unidirectionnel (UD). Cependant, une couche textile obtenue par tissage identique à la couche textile 42 sera préférablement choisie. Un tissé sera plus facile à imprégner / étancher par la colle comparativement à un tricot, il sera également plus résistant mécaniquement (notamment en déchirure) que les renforts textiles de type non tissé ou UD ou nappe tramée ou grille.

La couche textile 54 est constituée par un matériau appartenant à la liste comprenant le polyamide, le polyester, la rayonne, le coton, le verre, le polyéthylène, le polypropylène, l'aramide, la para-aramide, le polytétrafluoroéthylène (PTFE), la polyétheréthercétone (PEEK), ou le carbone, ou une combinaison de de ces matériaux. Une préférence sera donnée au polyamide présentant en général de bonnes adhérences et un coût moins élevé que les aramides ou le carbone.

La surface extérieure 57 de la couche textile 54 est traitée par une solution d'adhérisation plein bain, par exemple de type RFL (Résorcine, Formol, Latex), à solution comprenant des isocyanates ou à résines réactives. Cette surface extérieure 57 peut également avoir subi un traitement électrostatique, par exemple de type Corona, par plasma atmosphérique ou par fibroline.

La couche textile 54 pourra être teinte, des fils teints dans la masse pourront aussi être utilisés dans sa constitution.

La couche de caoutchouc 52 est constituée quant à elle de préférence d'un élastomère, par exemple un élastomère de type naturel (NR), polyisoprène (IR), polybutadiène (BR), chloroprène (CR), polyuréthane (PU) ou épichlorhydrine (ECO). Cette couche n'étant pas soumise à l'environnement extérieur et ne nécessitant pas une excellente élasticité à froid, contrairement à la couche 32 qui doit pouvoir se gonfler, de nombreux autres élastomères peuvent convenir.

La couche de caoutchouc 52 présente une épaisseur d'environ 0,10 à 0,30 mm et avantageusement de 0,15 à 0,25 mm (0,20 mm ± 0,05 mm). L'épaisseur de cette couche est optimisée pour permettre d'étancher les points de coutures 36 tout en utilisant la masse minimum nécessaire pour assurer cette fonction sans réduire la fiabilité de tenue au cyclage du dégivreur.

Typiquement on pourra utiliser un tissu de masse surfacique maximum de 400 g/m² pour réaliser la couche textile 54, sachant qu'au-delà de 300 g/m², le gain de masse apporté n'est plus vraiment significatif pour l'application. Dans l'exemple proposé, la couche textile 54 présente une masse surfacique inférieure à 120 g/m². La couche d'élastomère 52 présentant quant à elle une épaisseur optimisée, la masse surfacique totale de la couche interne 50 est d'environ 335 g/m², ce qui représente un gain de 295 g/m² par rapport à la couche de l'art antérieur qui présente une masse surfacique d'environ 630 g/m².

La couche 40 est obtenue par calandrage de la couche 44 sur le textile adhérisé 42.

Ainsi, la couche 50 pourra être obtenue en utilisant le matériau de la couche 40 dans le sens opposé (tête-bêche), les deux couches d'élastomère 44 et 52 étant liées l'une à l'autre, de préférence par co-vulcanisation. Ainsi d'un point de vue industriel les couches 40 et 50 peuvent être réalisées à partir du même matériau, ce qui permet de diminuer le nombre de références.

Le fonctionnement du dispositif 1 conforme à la présente invention, lorsqu'il est collé sur la surface extérieure 2 d'un aéronef, est le suivant.

Lorsque du givre s'est déposé en plaque sur la couche externe 10, un gaz sous pression est injecté dans les chambres gonflables 35 de manière à déformer très rapidement la couche textile 34 de la couche intermédiaire externe 30 sous l'effet du gaz injecté. Cette action mécanique brutale du dispositif de dégivrage 1 brise et expulse ledit givre à l'extérieur, de sorte que la surface 2 de l'aéronef n'est plus sujette à des dysfonctionnements. Ce gonflement peut être réalisé de manière répétée pour optimiser la rupture et l'expulsion du givre. En général il y a deux cycles différents, un rapide et un lent. En fonction des conditions de givrage (accrétion lente/faible ou rapide/forte), on choisit soit le mode lent soit le mode rapide.

La solution ainsi présentée permet un gain non négligeable de poids grâce à l'utilisation d'un nombre inférieure de couches et/ou d'une gestion optimisée de leurs épaisseurs et masses surfaciques respectives, tout en facilitant la fabrication du dispositif de dégivrage dans le cas où les couches 40 et 50 sont identiques et liées tête bêche l'une à l'autre.

Il va de soi que la description détaillée de l'objet de l'Invention, donnée uniquement à titre d'illustration, ne constitue en aucune manière une limitation. L'étendue de la présente invention est définie par les revendications.

Ainsi, les couches 32 et 44 peuvent être constituées de deux couches.

## Revendications

1. Dispositif de dégivrage (1) de type pneumatique pour briser et retirer un dépôt de glace accumulée sur la surface extérieure (2) d'un aéronef, en particulier sur une aile d'avion, comprenant au moins, de l'extérieur vers l'intérieur :
- une couche externe (10) résistante à l'environnement extérieur,
- au moins deux couches intermédiaires externe (30) et interne (40) reliées entre elles par un réseau de points de couture espacés (36) afin de définir des chambres dégivrantes (35) pouvant être gonflées rapidement à l'aide d'air injecté sous pression de manière à créer une expansion du dispositif (1) provoquant une action mécanique de rupture de la glace,
- une couche interne d'interface (50), **caractérisé en ce que** la couche interne d'interface (50) comporte au moins une couche constituée de textile (54), laquelle est située la plus à l'intérieur du dispositif de dégivrage (1) et présente une surface intérieure (55) adaptée à être en contact directe avec une surface extérieure (2) de l'aéronef.

2. Dispositif (1) selon la revendication 1, **caractérisé en ce que** la couche constituée de textile (54) de la couche interne d'interface (50) est du type faisant partie de la liste comprenant un textile tricoté, un textile tissé, un textile non tissée obtenu par voie mécanique, par collage ou par soudure, un textile à nappe tramée, un textile à grille ou un tissu unidirectionnel (UD).

3. Dispositif (1) selon la revendication 2, **caractérisé en ce que** le matériau constituant la couche constituée de textile (54) de la couche interne d'interface (50) appartient à la liste comprenant le polyamide, le polyester, la rayonne, le coton, le verre, le polyéthylène, le polypropylène, l'aramide, la para-aramide, le polytétrafluoroéthylène (PTFE), la polyétheréthercétone (PEEK), ou le carbone, ou une combinaison de de ces matériaux.

4. Dispositif (1) selon l'une quelconque des revendications précédentes, **caractérisé en ce que** la couche constituée de textile (54) de la couche interne d'interface (50) présente une surface extérieure (57) traitée par une solution d'adhérisation de type plein bain.

5. Dispositif (1) selon la revendication 4, **caractérisé en ce que** la couche constituée de textile (54) de la couche interne d'interface (50) présente une surface extérieure (57) traitée par une solution d'adhérisation plein bain de type RFL (Résorcine, Formol, Latex).

6. Dispositif (1) selon la revendication 4, **caractérisé en ce que** la couche constituée de textile (54) de la couche interne d'interface (50) présente une surface extérieure (57) traitée par une solution d'adhérisation plein bain de type à solution comprenant des isocyanates.

7. Dispositif (1) selon la revendication 4, **caractérisé en ce que** la couche constituée de textile (54) de la couche interne d'interface (50) présente une surface extérieure (57) traitée par une solution d'adhérisation plein bain de type à résines réactives.

8. Dispositif (1) selon l'une quelconque des revendications 1 à 3, **caractérisé en ce que** la couche constituée de textile (54) de la couche interne d'interface (50) présente une surface extérieure (57) et/ou intérieure (55) traitée par un traitement électrostatique, par exemple de type Corona, par plasma atmosphérique ou par fibroline.

9. Dispositif (1) selon l'une quelconque des revendications précédentes, **caractérisé en ce que** la couche interne d'interface (50) comporte, sur la surface extérieure (57) de la couche constituée de textile (54), une couche de caoutchouc (52), de préférence un élastomère, par exemple un élastomère de type naturel (NR), polyisoprène (IR), polybutadiène (BR), chloroprène (CR), polyuréthane (PU) ou épichlorhydrine (ECO).

10. Dispositif (1) selon la revendication 9, **caractérisé en ce que** la couche de caoutchouc (52) présente une épaisseur d'environ 0,10 à 0,30 mm et de préférence de 0,15 à 0,25 mm.

11. Dispositif (1) selon la revendication 9 ou la revendication 10, **caractérisé en ce que** la couche intermédiaire interne (40) comporte une couche textile supérieure (42) et une couche inférieure (44) réalisée dans un matériau identique à celui de la couche de caoutchouc (52) de la couche interne d'interface (50).

12. Dispositif (1) selon la revendication 11, **caractérisé en ce que** la couche intermédiaire interne (40) et la couche interne d'interface (50) sont empilées tête bêche l'une sur l'autre, leurs couches respectives en caoutchouc (52, 44) étant liées entre elles, de préférence par co-vulcanisation.

13. Dispositif (1) selon l'une quelconque des revendications 9 à 12, **caractérisé en ce que** la surface intérieure (55) de la couche constituée de textile (54) de la couche interne d'interface (50) est non adhérisée.

14. Dispositif (1) selon l'une quelconque des revendications précédentes, **caractérisé en ce que** la couche constituée de textile (54) de la couche interne d'interface (50) présente une densité surfacique inférieure à environ 400g/m², de préférence inférieure à environ 300g/m² et de manière avantageuse inférieure à environ 120g/m².

## Patentansprüche

1. Enteisungsvorrichtung (1) vom pneumatischen Typ zum Aufbrechen und Entfernen einer Eisablagerung, die sich auf der Außenfläche (2) eines Luftfahrzeugs, insbesondere auf einem Flugzeugflügel, angesammelt hat, von außen nach innen mindestens Folgendes umfassend:
- eine der äußeren Umgebung widerstehende Außenschicht (10),
- mindestens zwei äußere (30) und innere (40) Zwischenschichten, die durch ein Netz an beabstandeten Nahtstellen (36) miteinander verbunden sind, um Enteisungskammern (35) zu definieren, die rasch mithilfe von injizierter Druckluft aufgeblasen werden können, um eine Ausdehnung der Vorrichtung (1) zu schaffen, die für eine mechanische Wirkung zum Brechen des Eises sorgt,
- eine innere Schnittstellenschicht (50),
**dadurch gekennzeichnet, dass** die innere Schnittstellenschicht (50) mindestens eine aus Textil (54) gebildete Schicht beinhaltet, welche sich ganz innen in der Enteisungsvorrichtung (1) befindet und eine Innenfläche (55) aufweist, die ausgeführt ist, um in direktem Kontakt mit einer Außenfläche (2) des Luftfahrzeugs zu sein.

2. Vorrichtung (1) nach Anspruch 1, **dadurch gekennzeichnet, dass** die aus Textil (54) gebildete Schicht der inneren Schnittstellenschicht (50) vom Typ ist, Teil der Liste zu sein, die ein Stricktextil, ein Gewebetextil, ein Vliestextil, das auf mechanischem Wege durch Verkleben oder Verschweißen erhalten wird, ein Textil mit Reifencord, ein Gittertextil oder ein unidirektionales Textil (UD) umfasst.

3. Vorrichtung (1) nach Anspruch 2, **dadurch gekennzeichnet, dass** das Material, das die aus Textil (54) gebildete Schicht der inneren Schnittstellenschicht (50) bildet, der Liste angehört, die Polyamid, Polyester, Kunstseide, Baumwolle, Glas, Polyethylen, Polypropylen, Aramid, Para-Aramid, Polytetrafluorethylen (PTFE), Polyehteretherketon (PEEK), oder Karbon oder eine Kombination dieser Materialien umfasst.

4. Vorrichtung (1) nach einem der vorstehenden Ansprüche, **dadurch gekennzeichnet, dass** die aus Textil (54) gebildete Schicht der inneren Schnittstellenschicht (50) eine Außenfläche (57) aufweist, die durch eine Haftverbindungslösung vom Typ Vollbad behandelt wird.

5. Vorrichtung (1) nach Anspruch 4, **dadurch gekennzeichnet, dass** die aus Textil (54) gebildete Schicht der inneren Schnittstellenschicht (50) eine Außenfläche (57) aufweist, die durch eine Vollbad-Haftverbindungslösung vom Typ RFL (Resorcin, Formaldehyd, Latex) behandelt wird.

6. Vorrichtung (1) nach Anspruch 4, **dadurch gekennzeichnet, dass** die aus Textil (54) gebildete Schicht der inneren Schnittstellenschicht (50) eine Außenfläche (57) aufweist, die durch eine Vollbad-Haftverbindungslösung vom Typ mit einer Lösung behandelt wird, die Isocyanate umfasst.

7. Vorrichtung (1) nach Anspruch 4, **dadurch gekennzeichnet, dass** die aus Textil (54) gebildete Schicht der inneren Schnittstellenschicht (50) eine Außenfläche (57) aufweist, die durch eine Vollbad-Haftverbindungslösung vom Typ mit reaktiven Harzen behandelt wird.

8. Vorrichtung (1) nach einem der Ansprüche 1 bis 3, **dadurch gekennzeichnet, dass** die aus Textil (54) gebildete Schicht der inneren Schnittstellenschicht (50) eine Außen- (57) und/oder Innenfläche (55) aufweist, die durch eine elektrostatische Behandlung, beispielsweise vom Typ Korona, atmosphärischem Plasma oder Fibroline behandelt wird.

9. Vorrichtung (1) nach einem der vorstehenden Ansprüche, **dadurch gekennzeichnet, dass** die innere Schnittstellenschicht (50) auf der Außenfläche (57) der aus Textil (54) gebildeten Schicht eine Gummischicht (52), vorzugsweise ein Elastomer, beispielsweise ein Elastomer vom Typ natürlich (NR), Polyisopren (IR), Polybutadien (BR), Chloropren (CR), Polyurethan (PU) oder Epichlorhydrid (ECO) beinhaltet.

10. Vorrichtung (1) nach Anspruch 9, **dadurch gekennzeichnet, dass** die Gummischicht (52) eine Dicke von etwa 0,10 bis 0,30 mm, und vorzugsweise von 0,15 bis 0,25 mm aufweist.

11. Vorrichtung (1) nach Anspruch 9 oder Anspruch 10, **dadurch gekennzeichnet, dass** die innere Zwischenschicht (40) eine obere Textilschicht (42) und eine untere Schicht (44) beinhaltet, die aus einem identischen Material wie jenes der Gummischicht (52) der inneren Schnittstellenschicht (50) realisiert ist.

12. Vorrichtung (1) nach Anspruch 11, **dadurch gekennzeichnet, dass** die innere Zwischenschicht (40) und die innere Schnitstellenschicht (50) entgegengesetzt liegend aufeinander gestapelt sind, wobei ihre jeweiligen Gummischichten (52, 44) vorzugsweise durch Co-Vulkanisierung miteinander verbunden sind.

13. Vorrichtung (1) nach einem der Ansprüche 9 bis 12, **dadurch gekennzeichnet, dass** die Innenfläche (55) der aus Textil (54) gebildeten Schicht der inneren Schnittstellenschicht (50) nicht haftverbunden ist.

14. Vorrichtung (1) nach einem der vorstehenden Ansprüche, **dadurch gekennzeichnet, dass** die aus Textil (54) gebildete Schicht der inneren Schnittstellenschicht (50) eine Oberflächendichte aufweist, die geringer als etwa 400 g/m² ist, vorzugsweise geringer als etwa 300 g/m² und vorteilhafterweise geringer als etwa 120 g/m².

## Claims

1. A deicing device (1) of the pneumatic type for breaking and removing an ice deposit accumulated on the outer surface (2) of an aircraft, in particular on an airplane wing, comprising at least, from the outside in:
- an outer layer (10) intended to withstand the outside environment,
- at least two outer (30) and inner (40) intermediate layers connected to one another by a network of stitches (36) spaced apart so as to define deicing chambers (35) that can be inflated quickly using injected pressurized air so as to create an expansion of the device (1) causing a mechanical action to break the ice,
- an inner interface layer (50),
**characterized in that** the inner interface layer (50) includes at least one layer constituted of textile (54), which is situated the furthest toward the inside of the deicing device (1) and has an inner surface (55) adapted for being in direct contact with an outer surface (2) of the aircraft.

2. The device (1) according to claim 1, **characterized in that** the layer constituted of textile (54) of the inner interface layer (50) is of the type belonging to the list comprising a net textile, a woven textile, and nonwoven textile obtained mechanically, by gluing or by welding, an inlaid web textile, a grid textile or a unidirectional (UD) fabric.

3. The device (1) according to claim 2, **characterized in that** the material making up the layer constituted of textile (54) of the inner interface layer (50) belongs to the list comprising polyamide, polyester, rayon, cotton, glass, polyethylene, polypropylene, aramid, para-aramid, polytetrafluoroethylene (PTFE), polyether ether ketone (PEEK), or carbon, or a combination of these materials.

4. The device (1) according to any one of the preceding claims, **characterized in that** the layer constituted of textile (54) of the inner interface layer (50) has an outer surface (57) treated with an adhering solution of the full bath type.

5. The device (1) according to claim 4, **characterized in that** the layer constituted of textile (54) of the inner interface layer (50) has an outer surface (57) treated with a full bath adhering solution of the RFL (Resorcinol, Formol, Latex) type.

6. The device (1) according to claim 4, **characterized in that** the layer constituted of textile (54) of the inner interface layer (50) has an outer surface (57) treated by a full bath adhering solution of the type with solution comprising isocyanates.

7. The device (1) according to claim 4, **characterized in that** the layer constituted of textile (54) of the inner interface layer (50) has an outer surface (57) treated with a full bath adhering solution of the reactive resins type.

8. The device (1) according to any one of claims 1 to 3, **characterized in that** the layer constituted of textile (54) of the inner interface layer (50) has an outer (57) and/or inner (55) surface treated by electrostatic treatment, for example of the Corona type, by atmospheric plasma or by fibroline.

9. The device (1) according to any one of the preceding claims, **characterized in that** the inner interface layer (50) includes, on the upper surface (57) of the layer constituted of textile (54), a layer of rubber (52), preferably elastomer, for example a natural elastomer (NR), polyisoprene (IR), polybutylene (BR), chloroprene (CR), polyurethane (PU) or epichlorohydrin (ECO).

10. The device (1) according to claim 9, **characterized in that** the layer of rubber (52) has a thickness from about 0.10 to 0.30 mm, and preferably from 0.15 to 0.25 mm.

11. The device (1) according to claim 9 or claim 10, **characterized in that** the inner intermediate layer (40) includes an upper textile layer (42) and a lower textile layer (44) made from a material identical to that of the layer of rubber (52) of the inner interface layer (50).

12. The device (1) according to claim 11, **characterized in that** the inner intermediate layer (40) and the inner interface layer (50) are stacked head to tail on one another, their respective rubber layers (52, 44) being connected to one another, preferably by co-vulcanization.

13. The device (1) according to any one of claims 9 to 12, **characterized in that** the inner surface (55) of the textile layer (54) of the inner interface layer (50) is not adhered.

14. The device (1) according to any one of the preceding claims, **characterized in that** the layer constituted of textile (54) of the inner interface layer (50) has a surface density below about 400 g/m², preferably below about 300 g/m² and advantageously less than about 120 g/m².
